# EUROPEAN PATENT APPLICATION

(11) **EP 4 810 573 A1**
(43) Date of publication of application: **23.09.2026**
(21) Application number: 24891276.8
(22) Date of filing: 05.11.2024
(51) Int. Cl.: C08L 101/10, C08K 5/17, C08K 5/56, C08K 5/5435, C08L 33/04

(54) **CURABLE RESIN COMPOSITION**

(30) Priority: 13.11.2023 JP 2023192774
(71) Applicant: ThreeBond Co., Ltd., Tokyo 192-0398 (JP)
(72) Inventor: OGASAWARA, Tatsuki, Hachioji-shi, Tokyo 192-0398 (JP); NISHIZAWA, Takuto, Hachioji-shi, Tokyo 192-0398 (JP); INOUE, Koshiro, Hachioji-shi, Tokyo 192-0398 (JP)
(74) Representative: Crow, Martin
(86) International application number: PCT/JP2024/039241
(87) International publication number: WO 2025/105237

(57) **Abstract**

To provide a means capable of maintaining resistance to a coolant. A moisture-curable resin composition includes the following components (A) to (D):
(A) component: an organic polymer having a hydrolyzable silyl group;
(B) component: an organozinc catalyst;
(C) component: (C-1) a monoamine compound having a C₇₋₂₀ alkyl group, and/or (C-2) a diamine compound in which an alkyl group containing less than 5 carbon atoms is directly bonded to a nitrogen atom; and
(D) component: a silane coupling agent having an epoxy group.

## Description

### TECHNICAL FIELD

The present invention relates to a coolant (antifreeze)-resistant curable resin composition.

Sealing agents for a coolant (antifreeze) are needed as sealing agents around drive and on-board parts for automobiles. However, as performance of the coolant has continued to improve, there has been a problem in that conventional sealing agents cannot provide satisfactory sealing performance. JP 2008-274119 A describes a coolant-resistant photocurable composition. However, in the case of photocuring, when fillers, pigments, or the like are contained, there is a risk that light energy does not reach the inside of the composition, so that the inside may fail to be cured incompletely. In addition, JP 2008-274119 A is silent on adhesion to an adherend, and the function as a sealing agent is lost in the case of occurrence of peeling from the adherend.

### SUMMARY OF INVENTION

Aluminum members are widely used in, for example, automotive drive parts, on-board parts, and radiators. Conventional sealing agents have poor adhesion and sealing performance to metals such as aluminum, and have difficulty maintaining resistance to coolants.

The present inventors have conducted intensive research to achieve the above-mentioned purpose, and, as a result, have discovered a method involving a curable resin composition that is resistant to a coolant.

The gist of the present invention is described below.
[1] A moisture-curable resin composition comprising the following components (A) to (D):
   (A) component: an organic polymer having a hydrolyzable silyl group;
   (B) component: an organozinc catalyst;
   (C) component: (C-1) a monoamine compound having a C₇₋₂₀ alkyl group, and/or (C-2) a diamine compound in which an alkyl group containing less than 5 carbon atoms is directly bonded to a nitrogen atom; and
   (D) component: a silane coupling agent having an epoxy group.
[2] The moisture-curable resin composition according to [1], wherein a main backbone of the organic polymer of the component (A) is a (meth)acrylic polymer.
[3] The moisture-curable resin composition according to [1] or [2], wherein the hydrolyzable silyl group of the component (A) is a dialkoxysilyl group.
[4] The moisture-curable resin composition according to any one of [1] to [3], wherein the component (C) is contained in an amount of 0.1 to 20 parts by mass based on 1 part by mass of the component (B).
[5] The moisture-curable resin composition according to any one of [1] to [4], wherein the component (D) is contained in an amount of 0.1 to 11 parts by mass based on 1 part by mass of the component (C).
[6] A two-component mixing type moisture-curable resin composition comprising: an agent A containing the following (A) to (C) components and an agent B containing the following (D) component:
   (A) component: an organic polymer having a hydrolyzable silyl group;
   (B) component: an organozinc catalyst;
   (C) component: (C-1) a monoamine compound having a C₇₋₂₀ alkyl group, and/or (C-2) a diamine compound in which an alkyl group containing less than 5 carbon atoms is directly bonded to a nitrogen atom; and
   (D) component: a silane coupling agent having an epoxy group.
[7] A cured material obtained by curing the moisture-curable resin composition according to any one of [1] to [6].
[8] The moisture-curable resin composition according to any one of [1] to [6], wherein an adherend is aluminum and/or polyphenylene sulfide.

### DESCRIPTION OF EMBODIMENTS

An embodiment of the present invention provides a moisture-curable resin composition including the following components (A) to (D):
(A) component: an organic polymer having a hydrolyzable silyl group;
(B) component: an organozinc catalyst;
(C) component: (C-1) a monoamine compound having a C₇₋₂₀ alkyl group, and/or (C-2) a diamine compound in which an alkyl group containing less than 5 carbon atoms is directly bonded to a nitrogen atom; and
(D) component: a silane coupling agent having an epoxy group.

The moisture-curable resin composition according to the present invention has high adhesion and sealing performance to metals such as aluminum, and a cured material obtained from the moisture-curable resin composition according to the present invention can exhibit excellent resistance to coolants.

The details of the present invention will be described below.

The component (A) that can be used in the present invention is an organic polymer having one or more hydrolyzable silyl groups per molecule. In view of reactivity, two or more hydrolyzable silyl groups are preferably contained per molecule. The hydrolyzable silyl group may be present in any of the side chains of the organic polymer and the ends of the main backbone of the organic polymer. The hydrolyzable silyl groups should be present at both ends of the main backbone of the polymer from the viewpoint of rubber elasticity and flexibility. One kind of the component (A) may be used singly, or two or more kinds thereof may be used in combination. Examples of the main backbone of the component (A) include polyoxyalkylene, polyester, polycarbonate, polyurethane, polyamide, polyurea, polyimide, polyethylene, polypropylene, polyisobutylene, a (meth)acrylic polymer, polystyrene, polyvinyl chloride, polybutadiene, polyisoprene, polyvinyl butyral, or polyvinyl ether. The main backbone of the component (A) is preferably a polymer of (meth)acrylic monomer from the viewpoint of coolant resistance. That is, the component (A) is an organic polymer having one or more hydrolyzable silyl groups per molecule while having, as a main backbone, a (meth)acrylic polymer in which the main monomer component is preferably a (meth)acrylic monomer.

The hydrolyzable silyl group is a group capable of crosslinking by undergoing a condensation reaction to form a siloxane linkage, and is a functional group having one to three hydrolyzable groups attached to silicon atoms. Examples of the hydrolyzable groups include alkoxy groups, alkenyloxy groups, acyloxy groups, amino groups, aminooxy groups, oxime groups, or amide groups. Examples of the hydrolyzable silyl groups include alkoxysilyl groups, alkenyloxysilyl groups, acyloxysilyl groups, aminosilyl groups, aminooxysilyl groups, oxime silyl groups, or amidosilyl groups. The hydrolyzable silyl group is preferably an alkoxysilyl group from the viewpoint of easy handling.

The alkoxy group attached to a silicon atom of the alkoxysilyl group is not particularly limited. Examples of the alkoxy group include a linear or branched C₁₋₂₀ alkoxy group. Preferred is a linear or branched C₁₋₈ alkoxy group. Examples of the alkoxy group include a methoxy, ethoxy, or propoxy group. A group other than an alkoxy group may be attached to a silicon atom of the alkoxysilyl group. Examples of the group other than an alkoxy group include a hydrogen atom, an alkyl group, an alkenyl group, or an arylalkyl group. Among them, the group other than an alkoxy group is preferably a linear or branched C₁₋₂₀ alkyl group, more preferably a linear or branched C₁₋₈ alkyl group, and still more preferably a methyl, ethyl, propyl, or isopropyl group. Examples of the alkoxysilyl group include an alkyl dialkoxysilyl group (dialkoxysilyl group), a trialkoxysilyl group, a trimethoxysilyl group, a triethoxysilyl group, a triisopropoxysilyl group, a methyldimethoxysilyl group, or a methyldiethoxysilyl group. In view of reactivity, the hydrolyzable silyl group of the component (A) is preferably an alkyldialkoxysilyl group, and most preferably a methyldimethoxysilyl group.

Various types of (meth)acrylic monomers can be used as the (meth)acrylic monomer that constitutes the (meth)acrylic polymer as the main backbone. The (meth)acryl monomer is a generic term for monomers having an acrylic group (acryloyl group) (H₂C=CH-C(=O)-) or a methacrylic group (methacryloyl group) (H₂C=C(CH₃)-C(=O)-). Examples of the (meth)acrylic monomer include, but are not limited to, (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, 2-perfluoroethyl ethyl (meth)acrylate, 2-perfluoroethyl-2-perfluorobutyl ethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexyl ethyl (meth)acrylate, 2-perfluorodecyl ethyl (meth)acrylate, or 2-perfluorohexadecyl ethyl (meth)acrylate. The (meth)acrylic polymer in the present invention can be obtained by polymerizing monomers selected from (meth)acrylic monomers. The (meth)acrylic monomer is preferably a (meth)acrylic monomer having a hydrocarbon group.

In the (meth)acrylic polymer serving as the main backbone, the content of constituent units derived from the (meth)acrylic monomer is preferably 50 mol% or more, more preferably 70 mol% or more, still more preferably 90 mol% or more, and most preferably 100 mol%.

The (meth)acrylic polymer serving as the main backbone may also contain constituent units derived from other monomers that can be copolymerized with the (meth)acrylic monomer. Examples of the other monomers include monomers containing an amide group, such as (meth)acrylamide and N-methylol (meth)acrylamide; monomers containing an amino group, such as aminoethyl vinyl ether; and monomers such as acrylonitrile, styrene, α-methylstyrene, alkyl vinyl ethers, vinyl chloride, vinyl acetate, vinyl propionate, and ethylene.

The number-average molecular weight (Mn) of the organic polymer of the component (A) is preferably 500 or more, and more preferably 3000 or more. The number-average molecular weight (Mn) of the organic polymer of the component (A) is preferably 100,000 or less, and more preferably 50,000 or less. When the number-average molecular weight of the organic polymer is 500 or more, the elasticity possessed by a cured material of the moisture-curable resin composition of the present invention is easily expressed. When the number-average molecular weight of the organic polymer is 100,000 or less, the viscosity of the moisture-curable resin composition according to the present invention can be appropriately adjusted, and stringing during application of the moisture-curable resin composition according to the present invention can be suppressed. The number-average molecular weight of the organic polymer of the component (A) can be determined by gel permeation chromatography (GPC) using polystyrene as a standard material. The viscosity of the organic polymer of the component (A) affects the viscosity of the moisture-curable resin composition according to the present invention, and from the viewpoint of coatability, the viscosity is preferably in the range of 100 to 1,000 Pa·s at 23 to 25°C.

The organic polymer of the component (A) can be obtained by various polymerization methods, and the methods are not particularly limited. The polymerization method should be a radical polymerization method from the viewpoints of versatility of monomers and ease of reaction control. The radical polymerization is preferably a controlled radical polymerization, more preferably a living radical polymerization, and particularly preferably an atom transfer radical polymerization. The method of introducing a hydrolyzable silyl group(s) into the (meth)acrylic polymer serving as the main backbone is already a known method and is described in JP H09-272714 A (US Patent No. 5986014), JP H11-043512 A, and the like.

Specific examples (commercially available products) of the component (A) include, but are not limited to, KANEKA XMAP (registered trademark) series SA110S, SA100S, SA120S, and OR110S, manufactured by Kaneka Corporation.

The component (B) that can be used in the present invention is an organozinc catalyst. The component (B) can condense a hydrolyzable silyl group(s) in the component (A). The component (B) may contain an ingredient that activates the catalyst.

Specific examples of the organozinc catalyst include, but are not limited to, zinc acrylate, zinc acetate, zinc citrate, zinc salicylate, zinc oxalate, zinc adipate, zinc carbamate, zinc phthalocyanine, zinc thiolates and zinc stearate, zinc naphthenate, zinc decanoate, zinc butyrate, zinc neodecanoate, zinc isobutyrate, zinc benzoate, zinc octylate, zinc 2-ethylhexanoate, zinc octylate, zinc naphthenate, zinc hexacyanocobaltate complexes, and zinc complexes of 1-methylimidazole-bis(2-hexanoate).

Examples of a product (commercially available product) of the component (B) include, but are not limited to, the K-KAT series (e.g., 670, XK-648, XK-635, XK-614, XK-661, XK-633.), manufactured by King Industries, Inc.

The moisture-curable resin composition of the present invention preferably contains 0.01 to 10 parts by mass, more preferably 0.05 to 5 parts by mass, and most preferably 0.07 to 3 parts by mass, of the component (B) based on 100 parts by mass of the component (A). When the content of the component (B) is 0.01 parts by mass or more, the initial bond strength is improved, and when the content of the component (B) is 10 parts by mass or less, the coolant resistance is excellent.

The component (C) that can be used in the present invention is (C-1) a monoamine compound having a C₇₋₂₀ alkyl group, and/or (C-2) a diamine compound in which an alkyl group containing less than 5 carbon atoms is directly bonded to a nitrogen atom. The reaction of the component (C) with the component (D) described below improves the coolant resistance of a cured material of the present invention. In (C-1), the C₇₋₂₀ alkyl group may be a linear or branched structure. In (C-1), the nitrogen atom of the monoamine should have one or more C₇₋₂₀ alkyl groups, and preferably one C₇₋₂₀ alkyl group in terms of initial bond strength. In (C-1), when the alkyl group contains 7 or more carbon atoms, electron donation to the amino group is increased, and it is considered that the component (C-1) can preferentially react with the epoxy group (e.g., a glycidyl group) of the component (D), which will be described later, rather than with the hydrolyzable silyl group (e.g., an alkoxysilyl group) of the component (A). In (C-1), when the number of carbon atoms is 20 or less, the reaction product formed between the component (C-1) and the component (D) does not become excessively large, is more likely to migrate toward the vicinity of an interface, and is considered to be able to contribute to coolant resistance. Examples of the component (C-1) include, but are not limited to, 1-aminoheptane, 1-aminooctane, 1-aminononane, 1-aminodecane, 2-methylhexylamine, 2-ethylhexylamine, 2-propylhexylamine, 2-butylhexylamine, 3-ethylhexylamine, 3-propylhexylamine, and 3-butylhexylamine. In (C-2), one or more alkyl groups containing less than 5 carbon atoms (4 or less carbon atoms) may be directly bonded to a nitrogen atom(s) of the diamine, and from the viewpoint of coolant resistance, it is preferable that two such alkyl groups are directly bonded to a nitrogen atom(s) of the diamine. The term "directly" means that the bonding uses no other atom between the nitrogen atom and the alkyl group. In (C-2), the alkyl group may contain less than 5 carbon atoms (4 or less carbon atoms), and from the viewpoint of bond strength, the alkyl group preferably contains less than 3 carbon atoms (2 or less carbon atoms), and most preferably contains less than 2 carbon atoms (1 carbon atom). In (C-2), when the alkyl group contains less than 5 carbon atoms (4 or less carbon atoms), the reaction product formed between the component (C-2) and the component (D) does not become excessively bulky, is more likely to migrate toward the vicinity of an interface, and is considered to be able to contribute to coolant resistance. Examples of the component (C-2) include, but are not limited to, 3-diethylaminopropylamine, 4-diethylaminobutylamine, 5-diethylaminopentylamine, 3-dimethylaminopropylamine, 4-dimethylaminobutylamine, 5-dimethylaminopentylamine, 1,3-bis(methylamino)propane, 1,3-bis(ethylamino)propane, and N,N-dibutyl-1,3-propanediamine.

The moisture-curable resin composition of the present invention preferably contains 0.1 to 20 parts by mass of the component (C), more preferably 0.5 to 15 parts by mass, and most preferably 1 to 10 parts by mass based on 1 part by mass of the component (B). The coolant resistance of a cured material of the present invention is improved when the content of the component (C) is 0.1 parts by mass or more. The storage stability of the moisture-curable resin composition of the present invention is improved when the content of the component (C) is 20 parts by mass or less.

The component (D) that can be used in the present invention is a silane coupling agent having an epoxy group (provided that the component (A) is excluded). The silane coupling agent is a compound having one of the above hydrolyzable silyl groups in its molecule. The hydrolyzable silyl group is most preferably an alkoxysilyl group. In addition, the component (D) should contain one epoxy group in the molecule. The addition of the component (D) increases the initial bond strength of the moisture-curable resin composition according to the present invention and improves the coolant resistance after curing in a cured material according to the present invention.

Specific examples of the component (D) include, but are not limited to, 3-glycidoxypropyl trimethoxysilane and 3-glycidoxypropyl methyl diethoxysilane. Examples of a commercial product of the component (D) include, but are not limited to, KBM-403 and KBE-402, manufactured by Shin-Etsu Chemical Co., Ltd.

The moisture-curable resin composition of the present invention preferably contains 0.1 to 11 parts by mass of the component (D), more preferably 0.5 to 9 parts by mass, and most preferably 1 to 7 parts by mass based on 1 part by mass of the component (C). The coolant resistance after curing of a cured material of the present invention can be improved when the content of the component (D) is 0.1 parts by mass or more. When the content of the component (D) is 11 parts by mass or less, the reaction rate and the initial bond strength of the moisture-curable resin composition of the present invention are improved.

The moisture-curable resin composition according to the present invention may contain, as a component (E), at least one of a compound (e1) having at least one group selected from the group consisting of phenyl groups, vinyl groups, and alkyl groups, and one hydrolyzable silyl group, and a tetraalkoxysilane compound (e2), as long as the purpose of the present invention is not impaired. The compound in (e1) above is a compound having, in the molecule, at least one group selected from the group consisting of phenyl groups, vinyl groups, and alkyl groups and one hydrolyzable silyl group. The addition of the component (E) provides excellent adhesion to aluminum. Among the above, the component (E) is preferred to be a compound having at least one alkyl group and one hydrolyzable silyl group, because it causes good quick curing performance due to moisture.

Here, the alkyl group in the compound (e1) is preferably a C₁₋₁₀ alkyl group, more preferably a C₁₋₆ alkyl group, and still more preferably a C₁₋₄ alkyl group. The alkyl group may be linear, branched, or cyclic. The alkyl group is preferably a linear alkyl group. For the hydrolyzable silyl group in the compound (e1), the same hydrolyzable silyl group as in the component (A) above can be applied. The alkoxy group in the tetraalkoxysilane compound (e2) is preferably a C₁₋₁₀ alkoxy group, more preferably a C₁₋₆ alkoxy group, and still more preferably a C₁₋₄ alkoxy group. The alkoxy group may be linear, branched, or cyclic. The alkoxy group is preferably a linear alkoxy group.

In the compound of (e1), examples of the compound having at least one phenyl group and one hydrolyzable silyl group include phenyltrimethoxysilane, diphenyldimethoxysilane, and phenyltriethoxysilane. Examples of the compound having at least one vinyl group and one hydrolyzable silyl group include vinyltrimethoxysilane and vinyltriethoxysilane. Examples of the compound having at least one alkyl group and one hydrolyzable silyl group include dimethyldimethoxysilane, methyltrimethoxysilane, methyltriethoxysilane, dimethyldiethoxysilane, and hexyltrimethoxysilane. Examples of the tetraalkoxysilane compound (e2) include ethyl silicate, propyl silicate, and butyl silicate. One kind of the component (E) may be used singly, or two or more kinds thereof may be used in combination.

In the moisture-curable resin composition of the present invention, the addition amount (content) of the component (E) added is preferably 0.01 to 30 parts by mass, more preferably 0.5 to 20 parts by mass, still more preferably 0.7 to 15 parts by mass, particularly preferably 1 to 10 parts by mass, and most preferably 1.5 to 5 parts by mass based on 100 parts by mass of the component (A). Within the above ranges, the moisture-curable resin composition has excellent initial bond strength.

As long as the characteristics of the moisture-curable resin composition of the present invention and the physical properties of the cured material of the present invention are not impaired, other components other than the essential components (A) to (D) and the optional component (E) may be added in order to adjust their properties. Examples of the other components include a silane-based coupling agent other than the component (D), an inorganic filler, an organic filler, an antioxidant, an anti-aging agent, a plasticizer, a property regulator, and/or colored powder.

An inorganic filler may be added to the moisture-curable resin composition of the present invention. The purpose is to adjust the viscosity, improve the toughness, and so on. Examples of the inorganic filler include, but are not limited to, silica powder, fumed silica powder, calcium carbonate powder (e.g., heavy calcium carbonate powder, light calcium carbonate powder), alumina powder, and talc powder. One kind of the inorganic filler may be used singly, or two or more kinds thereof may be used in combination. In addition, the surface of the powder may or may not be treated. It is preferable to treat the surface of the powder because the surface-treated powder has increased ease of incorporation into the moisture-curable resin composition. Examples of the surface treatment agent include fatty acids such as stearic acid, a silane-based coupling agent, a titanium-based coupling agent, and an aluminum-based coupling agent. In consideration of nozzle clogging during dispense application, the inorganic filler preferably has an average particle diameter of 0.001 to 50 µm. The average particle diameter of the inorganic filler can be measured by observation using an electron microscope, a laser diffraction/scattering measurement apparatus using a dynamic light scattering method, or the like. Herein, the term "average particle diameter" refers to a 50% average particle diameter measured using a laser diffraction/scattering measurement apparatus in the case of particles on the micrometer order, and refers to an average particle diameter determined by observation using an electron microscope in the case of particles on the nanometer order. The addition amount (content) of the inorganic filler added is not particularly limited and should be 50 to 150 parts by mass based on 100 parts by mass of the component (A). When two or more inorganic fillers are contained, the amount (content) of the inorganic fillers added is the total amount.

The calcium carbonate powder includes fatty acid-treated calcium carbonate powder in order to improve the ease of incorporation into the moisture-curable resin composition. The moisture-curable resin composition of the present invention preferably contains fatty acid-treated calcium carbonate from the viewpoint of initial bond strength. Examples of a commercial product of the calcium carbonate powder include, but are not limited to, CALFINE Series 200M from Maruo Calcium Co, Ltd., SOFTON 1800 from SHIRAISHI CALCIUM KAISHA, LTD., and NCC #110 from NITTO FUNKA KOGYO K.K.

Examples of the fumed silica powder include, but are not limited to, a hydrophilic type in which silanol groups remain on an untreated surface, and a hydrophobic type in which the silica surface is rendered hydrophobic by treatment of silanol with dimethyldichlorosilane, dimethyl silicone, or the like. In the moisture-curable resin composition of the present invention, the fumed silica powder is preferably dimethyl silicone-treated fumed silica powder in terms of initial bond strength. Specific examples of the hydrophilic-type product include AEROSIL 90, 130, 150, 200, 255, 300, or 380 (manufactured by NIPPON AEROSIL CO., LTD.). Specific examples of the hydrophobic-type product include AEROSIL R972 (treated with dimethyldichlorosilane), R974 (addition of dimethyldichlorosilane), R104 (treated with octamethylcyclotetrasiloxane), R106 (treated with octamethylcyclotetrasiloxane), R202 and RY200 (treated with polydimethylsiloxane), R805 (treated with octylsilane), R812 (treated with hexamethyldisilazane), R816 (treated with hexadecylsilane), and R711 (treated with methacrylsilane), all manufactured by NIPPON AEROSIL CO., LTD. Other specific products of the fumed silica powder include the CAB-O-SIL series, a fumed silica manufactured by Cabot Corporation.

In the moisture-curable resin composition of the present invention, fatty acid-treated calcium carbonate powder and hydrophobic fumed silica powder are preferably used in combination in terms of initial bond strength. The mass ratio of the fatty acid-treated calcium carbonate powder to the hydrophobic fumed silica powder (fatty acid-treated calcium carbonate powder:hydrophobic fumed silica powder) is preferably 60:40 to 99:1, more preferably 70:30 to 98:2, and most preferably 80:20 to 97:3.

The moisture-curable resin composition of the present invention may contain an antioxidant. Its purpose is to prevent, for example, deterioration of the cured material due to the external environment. Examples of the kind of the antioxidant include, but are not limited to, a phenol-based antioxidant, a thioether-based antioxidant, a phosphorus-based antioxidant, or a nitroxide-based antioxidant. The antioxidant is preferably a thioether-based antioxidant in consideration of the resistance to coolants. The addition amount (content) of the antioxidant added is preferably 0.1 to 5.0 parts by mass based on 100 parts by mass of the component (A).

The moisture-curable resin composition of the present invention may contain a plasticizer. The purpose is to give, for example, softness and flexibility to the cured material. The plasticizer should be in liquid form at 25°C from the viewpoint of workability. The plasticizer is not particularly limited as long as the plasticizer is compatible with the component (A). Specific examples of the plasticizer include, but are not limited to, propylene carbonate, DOS (di-2-ethylhexyl sebacate), DOP (dioctyl phthalate), DINP (diisononyl phthalate), DIDP (diisodecyl phthalate), DBP (dibutyl phthalate), DMS (dimethyl maleate), DOA (dioctyl adipate), DINA (diisononyl adipate), TCP (tricresyl phosphate), DMS (dimethyl maleate), and (meth)acrylic polymers that are liquid at 25°C. From the viewpoint of not decreasing the initial bond strength, it is preferable for the moisture-curable resin composition of the present invention to contain a plasticizer having a diester structure, and it is more preferable to contain dimethyl maleate. One kind of the plasticizer may be used singly, or two or more kinds thereof may be used in combination.

The moisture-curable resin composition of the present invention may be a one-component type in which all components are included, or a two-component mixing type in which the respective components are divided into two and mixed later to make a single liquid. By dividing the components into two parts, namely an agent A and an agent B, unnecessary reactions during storage can be suppressed and storage stability can be improved; therefore, the moisture-curable resin composition according to the present invention is preferably a two-component mixing type. The moisture-curable resin composition according to the present invention, which is of a two-component mixing type, includes an agent A containing the component (B) and the component (C), and an agent B containing the component (D), wherein the component (A) and other components including a filler (an inorganic filler and an organic filler), a plasticizer, and an antioxidant may be contained in both the agents A and B, or may be contained in either one of the agent A or the agent B. The moisture-curable resin composition according to the present invention can be cured, whether it is a one-component type or a two-component mixing type, by being left to stand under an environment at 20 to 27°C and 30 to 70% RH, or by being left to stand under an atmosphere at 30 to 100°C. The curing (standing) time is from 10 minutes to 10 days.

When the moisture-curable resin composition according to the present invention is of a two-component mixing type, the method of mixing the agent A and the agent B is not particularly limited, as long as they can be uniformly mixed. Examples of the mixing method include a method using a stirrer such as a mixer or a planetary mixer, a method of manual stirring using a glass rod or the like, and a method using a static mixer. Since the moisture-curable resin composition according to the present invention, which is of a two-component mixing type, reacts upon mixing the agent A and the agent B, it is preferable to perform the mixing at 40°C or lower.

It is preferred that the agent A of the moisture-curable resin composition of the present invention, which is of a two-component mixing type, contains the component (A) in addition to the components (B) and (C). The addition amount (content) of the component (B) to be added based on 50 parts by mass of the component (A) in the agent A is preferably from 0.01 to 10 parts by mass, more preferably from 0.05 to 5 parts by mass, and most preferably from 0.07 to 3 parts by mass. The addition amount (content) of the component (C) to be added based on 50 parts by mass of the component (A) is preferably from 0.01 to 10 parts by mass, more preferably from 0.03 to 7 parts by mass, and most preferably from 0.05 to 4 parts by mass. Within the above ranges, the agent A with high storage stability can be obtained.

When the agent A of the moisture-curable resin composition of the present invention, which is of a two-component mixing type, contains the component (E), the addition amount (content) of the component (E) added is preferably 0.01 to 30 parts by mass based on 50 parts by mass of the component (A). When the agent A contains an inorganic filler, the addition amount (content) of the inorganic filler added is preferably 25 to 75 parts by mass based on 50 parts by mass of the component (A). When the agent A contains an antioxidant, the addition amount (content) of the antioxidant added is preferably 0.05 to 2.5 parts by mass based on 50 parts by mass of the component (A). When the agent A contains a plasticizer, the addition amount (content) of the plasticizer added is preferably 1 to 40 parts by mass based on 50 parts by mass of the component (A). Within the above ranges, the agent A with excellent workability and high storage stability can be obtained.

It is preferred that the agent B of the moisture-curable resin composition of the present invention, which is of a two-component mixing type, contains the component (A) in addition to the component (D). The addition amount (content) of the component (D) to be added based on 50 parts by mass of the component (A) is preferably from 0.1 to 11 parts by mass, more preferably from 0.5 to 9 parts by mass, and most preferably from 1 to 7 parts by mass. Within the above ranges, the agent B with high storage stability can be obtained, and when mixed with the agent A and cured, the cured material of the present invention can have high coolant resistance.

When the agent B of the moisture-curable resin composition of the present invention, which is of a two-component mixing type, contains an inorganic filler, the addition amount (content) of the inorganic filler added is preferably 30 to 90 parts by mass based on 50 parts by mass of the component (A). When the agent B contains an antioxidant, the addition amount (content) of the antioxidant added is preferably 0.05 to 2.5 parts by mass based on 50 parts by mass of the component (A). When the agent B contains a plasticizer, the addition amount (content) of the plasticizer added is preferably 1 to 40 parts by mass based on 50 parts by mass of the component (A). Within the above ranges, the agent B with excellent workability and high storage stability can be obtained.

In the moisture-curable resin composition of the present invention, which is of a two-component mixing type, the amount of the agent B based on 100 parts by mass of the agent A is preferably 10 to 300 parts by mass, more preferably 30 to 200 parts by mass, and still more preferably 50 to 150 parts by mass. The volume of the agent B when that of the agent A is 100 ml is preferably 10 to 300 ml, more preferably 30 to 200 ml, and still more preferably 50 to 150 ml. Within the above ranges, the initial bond strength is excellent.

Another aspect of the present invention is a cured material obtained by curing the above-described moisture-curable resin composition. In one embodiment, the cured material is a cured material obtained by mixing the preparations A and B, which constitute a two-component mixing type moisture-curable resin composition, and by curing the two-component mixing type moisture-curable resin composition.

The moisture-curable resin composition according to the present invention has excellent adhesion to aluminum, and is therefore preferably used for various applications such as adhesives, sealing agents, sealants, potting agents, coating agents, thermally conductive resins, flame-retardant resins, and conductive pastes, and is particularly used for the above applications related to automobile parts, electrical and electronic components, and building materials.

Examples of the automobile parts include radiators, PCU cooling systems, oil pans, transmissions, oil pressure switches, air flow meters, cam position sensors, water temperature sensors, crank position sensors, intake air temperature sensors, vehicle speed sensors, in-vehicle electronic circuit boards, nickel batteries, lithium batteries, and fuel cells. In automobile parts, the moisture-curable resin composition according to the present invention can be suitably used as an adhesive, a sealing agent, a potting agent, or the like.

In on-board applications, cooling water in a water-cooled cooling system contains chemicals such as LLC (registered trademark), and such cooling water is referred to as antifreeze, radiator fluid, or coolant. As a main component, ethylene glycol, propylene glycol, or the like are used, and as another component(s), a chlorinated phosphate-based corrosion inhibitor, a rust inhibitor, water, and/or the like are used. Due to deterioration of the cured material caused by the cooling water, sealing performance may deteriorate, resulting in peeling of the cured material from an adherend or cracking of the cured material, which raises concerns about leakage of the cooling water. The cured material of the present invention is resistant to coolants and is suitable for sealing cooling water. The wording "resistance to a coolant(s)" refers to the fact that no coolant leakage occurs even if the coolant and the cured material of the present invention come into contact with each other for a long period of time.

For example, aluminum alloys and polyphenylene sulfide resins are used as automotive parts because of their heat resistance and light weight. The moisture-curable resin composition of the present invention is suitable for aluminum and/or polyphenylene sulfide due to its excellent adhesion to aluminum and polyphenylene sulfide resins.

The sealing method using the moisture-curable resin composition of the present invention is not particularly limited. Typical examples of the sealing method include FIPG (formed-in-place gasket), CIPG (cured-in-place gasket), MIPG (molded-in-place gasket), and liquid injection molding. The moisture-curable resin composition of the present invention may be suitably used for FIPG.

FIPG is a method of bond sealing, the method including applying a moisture-curable resin composition of the present invention to a flange of a component to be sealed by using an automatic coating apparatus, etc., and then curing the moisture-curable resin composition while bonded together with another flange. More specifically, the sealing method is a method of sealing at least a part between at least two flanges of a component to be sealed having at least two flanges, the method including the steps of: applying a moisture-curable resin composition according to the present invention to a surface of at least one of the at least two flanges; bonding the one flange to which the moisture-curable resin composition has been applied and the other flange to each other via the moisture-curable resin composition; and curing the curable resin composition to seal at least a part between the at least two flanges.

CIPG refers to a method in which a moisture-curable resin composition according to the present invention is bead-applied to a flange of a component to be sealed by means of a screen printing applicator, an automatic applicator, or the like, the moisture-curable resin composition is cured to form a gasket, and the gasket is bonded to the other flange and compressed to achieve sealing. More specifically, the sealing method is a method of sealing at least a part between at least two flanges of a component to be sealed having at least two flanges, the method including the steps of: applying a moisture-curable resin composition according to the present invention to at least one of the at least two flanges; curing the applied moisture-curable resin composition to form a gasket composed of a cured material of the moisture-curable resin composition; and placing the other flange on the gasket and pressing the one flange to which the moisture-curable resin composition has been applied and the other flange against each other via the gasket to seal at least a part between the at least two flanges.

MIPG refers to a method in which a mold is pressed against a flange of a component to be sealed in advance, a moisture-curable resin composition is injected into a cavity formed between the mold and the flange, the resin composition is cured to form a gasket, and the gasket is bonded to the other flange and compressed to achieve sealing. After forming the gasket, the mold should be coated with a release agent such as a fluorine-based or silicone-based release agent in advance to facilitate removal from the mold. More specifically, the sealing method is a method of sealing at least a part between at least two flanges of a component to be sealed having at least two flanges, the method including the steps of: placing a gasket-forming mold on at least one flange of the at least two flanges; injecting a moisture-curable resin composition according to the present invention into at least a part of a space between the gasket-forming mold and the one flange on which the mold is placed; curing the moisture-curable resin composition to form a gasket composed of a cured material of the moisture-curable resin composition; removing the mold from the one flange; and placing the other flange on the gasket and pressing the one flange and the other flange against each other via the gasket to seal at least a part between the at least two flanges.

### Examples

### [Examples 1 to 4 and Comparative Examples 1 to 3]

The following components were provided to prepare moisture-curable resin compositions.
(A) Component: an organic polymer having a hydrolyzable silyl group
   - Polymer having an acrylic-monomer-based backbone and having two methyldimethoxysilyl groups in one molecule (KANEKA XMAP (registered trademark) SA110S, manufactured by Kaneka Corporation; viscosity: 500 Pa·s at 23°C).
(B) Component: an organozinc catalyst
   - Organozinc catalyst (XK-633, manufactured by King Industries)
(B') Component: an organometallic catalyst other than the component (B)
   - Titanium diisopropoxybis(ethyl acetoacetate) (ORGATIX TC-750, manufactured by Matsumoto Fine Chemical Co., Ltd.)
(C-1) Component: a monoamine compound having a C₇₋₂₀ alkyl group
   - 1-Aminooctane (reagent, manufactured by Tokyo Chemical Industry Co., Ltd.)
   - 2-Ethylhexylamine (reagent, manufactured by Tokyo Chemical Industry Co., Ltd.)
(C-2) Component: a diamine compound in which an alkyl group containing less than 5 carbon atoms is directly bonded to a nitrogen atom
   - 3-Diethylaminopropylamine (reagent, manufactured by Tokyo Chemical Industry Co., Ltd.)
   - N,N-Dibutyl-1,3-propanediamine (reagent, manufactured by Tokyo Chemical Industry Co., Ltd.)
(C') Component: a monoamine compound other than the component (C)
   - 1-Aminopropane (reagent, manufactured by Tokyo Chemical Industry Co., Ltd.)
(D) Component: a silane coupling agent having an epoxy group
   - 3-Glycidoxypropyltrimethoxysilane (KBM-403, manufactured by Shin-Etsu Chemical Co., Ltd.)
(D') Component: a silane coupling agent other than the component (D)
   - N-2-(Aminoethyl)-3-aminopropyltrimethoxysilane (KBM-603, manufactured by Shin-Etsu Chemical Co., Ltd.)
(E) Component: (e1) a compound having at least one group selected from the group consisting of phenyl groups, vinyl groups, and alkyl groups and one hydrolyzable silyl group
   - Methyl trimethoxysilane (KBM-13, manufactured by Shin-Etsu Chemical Co., Ltd.)

### Inorganic filler

- Hydrophobic calcium carbonate powder with an average particle diameter of 2.1 µm, an apparent specific gravity of 0.61 g/ml, and a DOP absorption rate of 16 ml/100 g (NCC #110, manufactured by NITTO FUNKA KOGYO K.K.)
- Dimethyl silicone-treated fumed silica powder with an average particle diameter of 12 nm (AEROSIL RY200, manufactured by NIPPON AEROSIL CO., LTD.)

### Plasticizer

- Dimethyl maleate (DMS, manufactured by HOKOKU CORPORATION)

### Antioxidant

- Thioether-based antioxidant (liquid at 25°C) (ADK STAB AO-26, manufactured by ADEKA Corporation)

Moisture-curable resin compositions of Examples 1 to 4 and Comparative Examples 1 to 3 were prepared by the following procedures. First, as an agent A, half of the component (A) and half of the antioxidant were weighed into a stirring vessel, and the mixture was stirred for 1 minute. Thereafter, half of the calcium powder was further weighed and added to the stirring vessel, followed by stirring at 80°C for 90 minutes while performing vacuum deaeration. The component (B) (or component (B')), the component (C) (or component (C')), the component (E), and half of the plasticizer were weighed and charged into the stirring vessel, and the mixture was stirred for 30 minutes while performing vacuum deaeration to prepare the agent A. Next, as an agent B, the remaining component (A) and the remaining antioxidant were weighed and charged into another stirring vessel, and the mixture was stirred for 1 minute. Thereafter, the fumed silica powder and the remaining calcium powder were weighed and added to the stirring vessel, followed by stirring at 80°C for 90 minutes while performing vacuum deaeration. The component (D) (or component (D')) and the remaining plasticizer were charged into the stirring vessel, and the mixture was stirred for 1 hour while performing vacuum deaeration to prepare the agent B. A moisture-curable resin composition was obtained by mixing 107.3 parts by mass of the agent B with 100 parts by mass of the agent A. The detailed blending amounts are given in Table 1, and all the values are expressed in parts by mass. Note that the blending amounts listed in Table 1 are the blending amounts after mixing the preparations A and B.

The test methods used in the Examples and Comparative Examples in Table 1 are as follows.

### [Measurement of tensile shear bond strength]

Using aluminum members each having a width of 25 mm, a length of 100 mm, and a thickness of 1 mm, two of the members were bonded and fixed with each moisture-curable resin composition with a bonding area of 10 mm × 25 mm (and a clearance of 1 mm). Test pieces were prepared by curing the moisture-curable resin composition by leaving it in an atmosphere at 23°C and 50% RH for 7 days. The test piece was pulled by a tensile tester at 50 mm/min and the maximum strength was defined as the "initial bond strength (MPa)". In view of peeling from the adherend, the initial tensile shear bond strength is preferably 0.6 MPa or more, and more preferably 0.8 MPa. Thereafter, the test piece was immersed in an aqueous solution containing 50 vol% ethylene glycol (reagent, manufactured by Tokyo Chemical Industry Co., Ltd.), which is a main component of a coolant liquid, and left to stand at 120°C for 240 hours. After the test piece was taken out and the immersion liquid was wiped off, the test piece was left to stand at 23°C for 2 hours, and the tensile shear bond strength was measured under the same conditions as described above. The measured value was defined as the "post-immersion bond strength (MPa)". Details of the tensile test were in accordance with JIS K 6249:2003. The "peeling state" was visually checked according to the following evaluation criteria. The post-immersion bond strength is preferably 1.4 MPa or more. In order to maintain the sealing performance against the immersion liquid, it is preferable that the peeling state is "○". Note that moisture-curable resin compositions that were unable to be measured due to poor curing are indicated with "-".

### <Evaluation criteria>

○: 50% or more and 100% or less of the peeled surface is caused by cohesive failure.
×: 0% or more and less than 50% of the peeled surface is caused by cohesive failure.

**[Table 1]**

| | | Example 1 | Example 2 | Example 3 | Example 4 | Comparative Example 1 | Comparative Example 2 | Comparative Example 3 |
|---|---|---|---|---|---|---|---|---|
| (A) Component | SA110S | 100 | 100 | 100 | 100 | 100 | 100 | 100 |
| (B) Component | XK-633 | 0.15 | 0.15 | 0.15 | 0.15 | 0.15 | | 0.15 |
| (B') Component | TC-750 | | | | | | 0.15 | |
| (C-1) Component | 1-Aminooctane | 1 | | | | | 1 | |
| | 2-Ethylhexylamine | | 1 | | | | | |
| (C-2) Component | 3-Diethylamin opropylamine | | | 1 | | | | 1 |
| | N,N-Dibutyl-1,3-propanediamine | | | | 1 | | | |
| (C') Component | 1-Aminopropane | | | | | 1 | | |
| (D) Component | KBM-403 | 4 | 4 | 4 | 4 | 4 | 4 | |
| (D') Component | KBM-603 | | | | | | | 4 |
| (E) Component | KBM-13 | 2.5 | 2.5 | 2.5 | 2.5 | 2.5 | 2.5 | 2.5 |
| Filler | NCC#110 | 88 | 88 | 88 | 88 | 88 | 88 | 88 |
| | AEROSIL RY200 | 7 | 7 | 7 | 7 | 7 | 7 | 7 |
| Plasticizer | DMS | 4 | 4 | 4 | 4 | 4 | 4 | 4 |
| Antioxidant | AO-26 | 3 | 3 | 3 | 3 | 3 | 3 | 3 |
| | Total | 209.65 | 209.65 | 209.65 | 209.65 | 209.65 | 209.65 | 209.65 |
| Tensile shear bond strength | Initial bond strength (MPa) | 0.8 | 0.8 | 1 | 0.6 | 0.7 | - | 1.1 |
| | 120°C×240h Post-immersion bond strength (MPa) | 1.5 | 1.5 | 1.5 | 1.5 | 1.4 | - | 1.7 |
| | 120°C×240h Post-immersion peeling state | ○ | ○ | ○ | ○ | × | - | × |

According to Table 1, it can be seen that the cured materials of the moisture-curable resin compositions of Examples 1 to 4 have good initial bond strength and coolant resistance. In the cured material of the moisture-curable resin composition of Comparative Example 1, the component (C') was used instead of the component (C), but it resulted in a poor peeling state after immersion in the coolant liquid. In addition, in the cured material of the moisture-curable resin composition of Comparative Example 2, the component (B') was used instead of the component (B), but it resulted in no curing. In the cured material of the moisture-curable resin composition of Comparative Example 3, the component (D') was used instead of the component (D), but it resulted in a poor peeling state after immersion in the coolant liquid.

Additional tests were further conducted on the moisture-curable resin compositions of Examples 1 to 3 and Comparative Example 1.

### [Measurement 2 of tensile shear bond strength]

Using aluminum members each having a width of 25 mm, a length of 100 mm, and a thickness of 1 mm, two of the members were bonded and fixed with each moisture-curable resin composition with a bonding area of 10 mm × 25 mm (and a clearance of 1 mm). Test pieces were prepared by curing the moisture-curable resin composition by leaving it in an atmosphere at 23°C and 50% RH for 7 days. The test piece was immersed in an aqueous solution containing 50 vol% ethylene glycol (reagent, manufactured by Tokyo Chemical Industry Co., Ltd.), which is a main component of a coolant liquid, and left to stand at 120°C for 500 hours. After the test piece was taken out and the immersion liquid was wiped off, the test piece was left to stand at 23°C for 2 hours, and then pulled at a rate of 50 mm/min using a tensile tester. The maximum strength was defined as the "Al/Al post-immersion bond strength (MPa)". Details of the tensile test were in accordance with JIS K 6249:2003. The tensile shear bond strength was measured under the same conditions as above using polyphenylene sulfide (PPS)-made members each having a width of 25 mm, a length of 100 mm, and a thickness of 2 mm, and was determined as the "PPS/PPS post-immersion bond strength (MPa)". The "peeling state" was visually checked according to the following evaluation criteria. The Al/Al post-immersion bond strength is preferably 1.2 MPa or more. The PPS/PPS post-immersion bond strength is preferably 1.4 MPa or more. In order to maintain the sealing performance against the immersion liquid, it is preferable that the peeling state is "O".

### <Evaluation criteria>

○: 50% or more and 100% or less of the peeled surface is caused by cohesive failure.
×: 0% or more and less than 50% of the peeled surface is caused by cohesive failure.

**[Table 2]**

| | | Example 1 | Example 2 | Example 3 | Comparative Example 1 |
|---|---|---|---|---|---|
| 120°C×500h Tensile shear bond strength 2 | Al/Al post-immersion bond strength (MPa) | 1.2 | 1.8 | 2.6 | 0.8 |
| | Al/Al post-immersion peeling state | ○ | ○ | ○ | × |
| | PPS/PPS post-immersion bond strength (MPa) | 1.4 | 1.8 | 2.6 | 0.8 |
| | PPS/PPS post-immersion peeling state | ○ | ○ | ○ | ○ |

It can be seen from Table 2 that the moisture-curable resin compositions of the present invention have good coolant resistance to both aluminum and polyphenylene sulfide. This test corresponds to use under severe conditions for the sealing agent in contact with the coolant, and there is a concern that the cured material may peel off from the adherend or deteriorate, resulting in deterioration of the sealing performance and leakage of the liquid. The moisture-curable resin compositions and cured materials of the present invention are sealing agents that can be used stably in such critical areas.

### Industrial Applicability

The moisture-curable resin composition according to the present invention has excellent adhesion to aluminum and coolant resistance, and is therefore suitably used for various applications such as adhesives, sealing agents, sealants, potting agents, coating agents, thermally conductive resins, flame-retardant resins, and conductive pastes. Accordingly, the moisture-curable resin composition is industrially useful because of its applicability to a wide range of fields.

The present application is based on Japanese Patent Application No. 2023-192774 filed on November 13, 2023, the disclosure of which is incorporated herein by reference in its entirety.

## Claims

1. A moisture-curable resin composition comprising the following components (A) to (D):
(A) component: an organic polymer having a hydrolyzable silyl group;
(B) component: an organozinc catalyst;
(C) component: (C-1) a monoamine compound having a C₇₋₂₀ alkyl group, and/or (C-2) a diamine compound in which an alkyl group containing less than 5 carbon atoms is directly bonded to a nitrogen atom; and
(D) component: a silane coupling agent having an epoxy group.

2. The moisture-curable resin composition according to claim 1, wherein a main backbone of the organic polymer of the component (A) is a (meth)acrylic polymer.

3. The moisture-curable resin composition according to claim 1, wherein the hydrolyzable silyl group of the component (A) is a dialkoxysilyl group.

4. The moisture-curable resin composition according to claim 1, wherein the component (C) is contained in an amount of 0.1 to 20 parts by mass based on 1 part by mass of the component (B).

5. The moisture-curable resin composition according to claim 1, wherein the component (D) is contained in an amount of 0.1 to 11 parts by mass based on 1 part by mass of the component (C).

6. A two-component mixing type moisture-curable resin composition comprising: an agent A containing the following (A) to (C) components and an agent B containing the following (D) component:
(A) component: an organic polymer having a hydrolyzable silyl group;
(B) component: an organozinc catalyst;
(C) component: (C-1) a monoamine compound having a C₇₋₂₀ alkyl group, and/or (C-2) a diamine compound in which an alkyl group containing less than 5 carbon atoms is directly bonded to a nitrogen atom; and
(D) component: a silane coupling agent having an epoxy group.

7. A cured material obtained by curing the moisture-curable resin composition according to claim 1 or 6.

8. The moisture-curable resin composition according to claim 1 or 6, wherein an adherend is aluminum and/or polyphenylene sulfide.
